# EUROPEAN PATENT APPLICATION

(11) **EP 4 391 168 A1**
(43) Date of publication of application: **26.06.2024**
(21) Application number: 22921431.7
(22) Date of filing: 04.07.2022
(51) Int. Cl.: H01M 50/20

(54) **DEEP SEA BATTERY DEVICE**

(30) Priority: 19.01.2022 CN 202220144034 U
(71) Applicant: Eve Energy Co., Ltd., Huizhou, Guangdong 516006 (CN)
(72) Inventor: ZHOU, Jieyu, Huizhou, Guangdong 516006 (CN); LI, Xiaokang, Huizhou, Guangdong 516006 (CN); QI, Dongrong, Huizhou, Guangdong 516006 (CN); LIU, Pengcheng, Huizhou, Guangdong 516006 (CN); LI, Zhimiao, Huizhou, Guangdong 516006 (CN)
(74) Representative: Herrero & Asociados, S.L.
(86) International application number: PCT/CN2022/103551
(87) International publication number: WO 2023/138000

(57) **Abstract**

A deep-sea battery device includes: a housing, a pouch, and a protective cover. The housing defines a pressure-releasing port, the pouch seals the pressure-releasing port. The pouch includes a body, a cushioning portion, and a connection portion. The cushioning portion is disposed between the body and the connection portion. The connection portion is clamped between the protective cover and the housing. The cushioning portion at least comprises an annular cushioning protrusion surrounding a periphery of the body. The cushioning protrusion protrudes toward an interior of the housing. A side of the cushioning protrusion away from the interior of the housing defines a groove. An opening of the groove faces the protective cover. The protective cover defines a through hole, the through hole is disposed at a position corresponding to the body. The body is disposed lower than an outer side of the housing that defines the pressure-releasing port.

## Description

The present application claims priority of the Chinese patent application No. 202220144034.8, filed on January 19, 2022, and contents of which are incorporated herein by its entireties.

### TECHNICAL FIELD

The present disclosure relates to the field of batteries, and in particular to a deep-sea battery device.

### BACKGROUND

In the art, deep-sea equipment, such as deep submergence vehicles, deep-submergence carriers, and deep-sea life-saving equipment, usually need to work in deep-sea at depths of several hundred meters or even thousands of meters, having a large pressure. As a diving depth of the deep-sea equipment increases, a pressure applied to the battery devices of the deep-sea equipment also increases accordingly.

The battery device is usually arranged with a pressure compensation assembly to withstand the pressure of the seawater and to regulate a pressure inside and a pressure outside the battery device. In the art, the pressure compensation assembly is usually mounted to the battery device by screws, and a pouch of the pressure compensation assembly is a flat structure. Therefore, the pressure compensation assembly may have following defects. In a process of the pressure compensation assembly receiving the pressure and being deformed, a fixed end of the pouch has a large amount of deformation, and a tension caused by the fixed end may rupture the pouch, resulting in a reduced service life of the pouch. In addition, when the pouch is ruptured, the pressure compensation assembly cannot balance pressures, and the battery device may fail to operate normally or even be damaged due to the pressure of the sea.

### SUMMARY OF THE DISCLOSURE

The present disclosure provides a deep-sea battery device, having a simple structure, which can effectively reduce the amount of deformation of a connection portion of the pouch, preventing the pouch from being damaged due to the tension.

The present disclosure provides a deep-sea battery device including: a housing, a pouch, and a protective cover. The housing defines a pressure-releasing port, the pouch seals the pressure-releasing port. The pouch includes a body, a cushioning portion, and a connection portion. The cushioning portion is disposed between the body and the connection portion. The connection portion is clamped between the protective cover and the housing. The cushioning portion at least comprises an annular cushioning protrusion surrounding a periphery of the body. The cushioning protrusion protrudes toward an interior of the housing. A side of the cushioning protrusion away from the interior of the housing defines a groove. An opening of the groove faces the protective cover. The protective cover defines a through hole, the through hole is disposed at a position corresponding to the body. The body is disposed lower than an outer side of the housing that defines the pressure-releasing port.

### BRIEF DESCRIPTION OF THE DRAWINGS

FIG. 1 is a cross-sectional view of a portion of a deep-sea battery device according to an embodiment of the present disclosure.
FIG. 2 is a structural schematic view of a first side of the pouch of the deep-sea battery device according to an embodiment of the present disclosure.
FIG. 3 is a structural schematic view of a second side of the pouch of the deep-sea battery device according to an embodiment of the present disclosure.
FIG. 4 is an enlarged view of a portion A of the deep-sea battery device shown in FIG. 4.

Reference numerals in the drawings:
1, housing; 11, pressure-releasing port; 12, seawaterling groove; 13, stepped groove; 2, pouch; 21, body; 211, guiding protrusion; 212, first guiding groove; 22, cushioning portion; 221, cushioning protrusion; 222, groove; 23, connecting portion; 3, protective cover; 31, through hole; 32, rib; 33, protrusion; 34, second guiding groove; 4, first sealing member; 5, second sealing member; 6, fastener.

### DETAILED DESCRIPTION

In the description of the present disclosure, unless otherwise expressly specified and limited, the terms "connected", "coupled", and "fixed" shall be understood in a broad sense. For example, the connection may be fixed connection, detachable connection, or two structures being configured as a one-piece and integral structure; or may be mechanical connection or electrical connection; or may be direct connection or indirect connection through an intermediate medium; or may be two elements being internally communicated with each other or two elements being interactive with each other. Any ordinary skilled person in the art may understand specific meanings of the above terms case by case.

In the present disclosure, unless otherwise expressly specified and limited, a first feature being located "above" or "below" a second feature may include direct contact between the first feature and the second feature or include indirect contact therebetween through another feature located therebetween. In addition, the first feature being located "above", "on", "on top of" the second feature includes the first feature being directly above and diagonally above the second feature, or simply indicates that the first feature is horizontally higher than the second feature. The first feature being located "below", "under", "at a lower of" the second feature includes the first feature being directly below and diagonally below the second feature, or simply indicates that the first feature is horizontally lower than the second feature.

The present disclosure provides a deep-sea battery device that is applied to a deep-sea operation equipment to provide power for the deep-sea operation equipment.

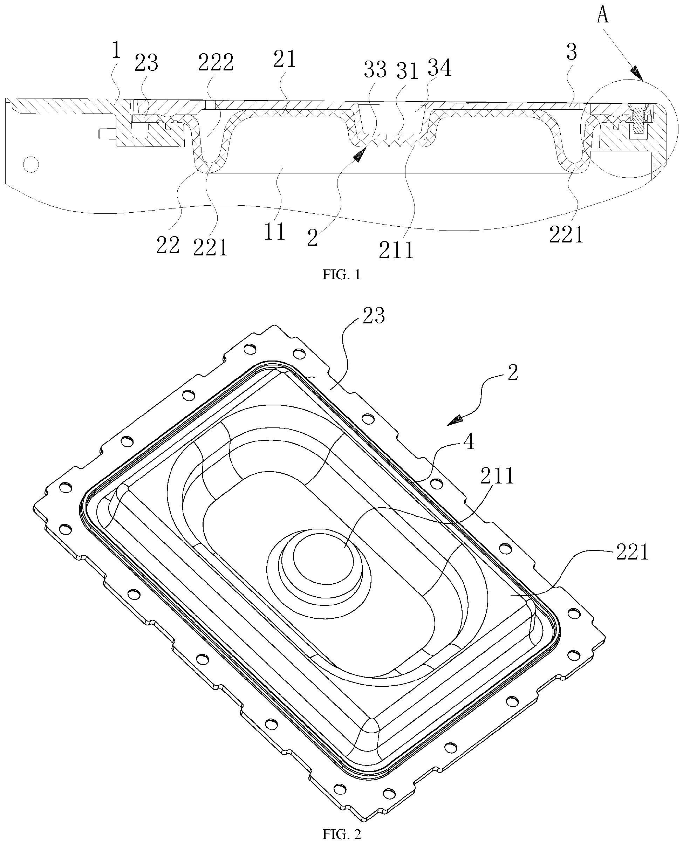

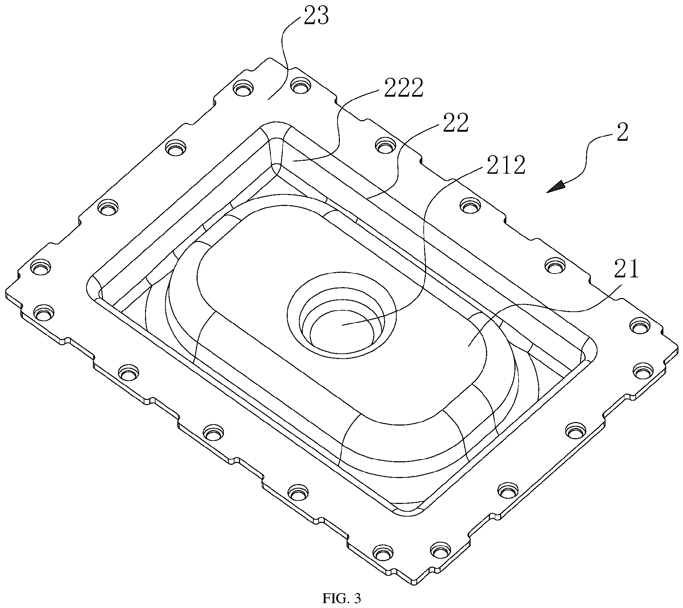

As shown in FIGS. 1 to 3, the deep-sea battery device includes a housing 1, a pouch 2, and a protective cover 3. The housing 1 defines a pressure-releasing port 11. The pouch 2 seals the pressure-releasing port 11. The pouch 2 includes a body 21, a cushioning portion 22, and a connection portion 23. The cushioning portion 22 is disposed between the body 21 and the connection portion 23. The connection portion 23 is clamped between the protective cover 3 and the housing 1. The cushioning portion 22 at least includes an annular cushioning protrusion 221 surrounding a periphery of the body 21. The cushioning protrusion 221 protrudes toward an interior of the housing 1. A side of the cushioning protrusion 221 away from the interior of the housing 1 defines a groove 222. An opening of the groove 222 faces the protective cover 3. The protective cover 3 defines a through hole 31. The through hole 31 is disposed at a position corresponding to the body 21. The body 21 is disposed lower than an outer side of the housing 1 that defines the pressure-releasing port 11. In an embodiment, the housing 1 is filled with inert oil. The body 21 of the pouch 2 is attached to the protective cover 3. When a pressure of the seawater passes through the through hole 31 to apply on the housing 1 of the battery, the pressure firstly applies on the body 21 of the pouch 2 to drive the body 21 to move and to be deformed towards the interior of the housing 1. Subsequently, the pressure applies on the cushioning portion 22. The amount of deformation of a connection between the cushioning protrusion 221 and the body 21 is greater than the amount of deformation of connection between the cushioning protrusion 221 and the connection portion 23. In this way, the amount of deformation of the connection portion 23 is reduced greatly, and the connection portion 23 of the pouch 2 is prevented from being damaged due to tension, and therefore, the pouch 2 is protected, and the service life of the pouch 2 is increased. In this case, a compression volume of the pouch 2 is greater than a compression volume of the inert oil, and the pouch 2 may balance the pressure. Since the cushioning protrusion 221 is protruding towards the interior of the housing 1, a space occupied by the pouch 2 is reduced. In this way, more battery packs may be arranged, and an energy density of the deep-sea battery device may be improved. Furthermore, since the amount of deformation of the connection portion 23 is small, the pouch 2 balances the pressure, a thickness of a wall of the pouch 2 may be reduced. Therefore, materials for manufacturing the pouch are reduced, and manufacturing costs are reduced.

In an embodiment, the thickness of the wall of the pouch 2 is 2mm.

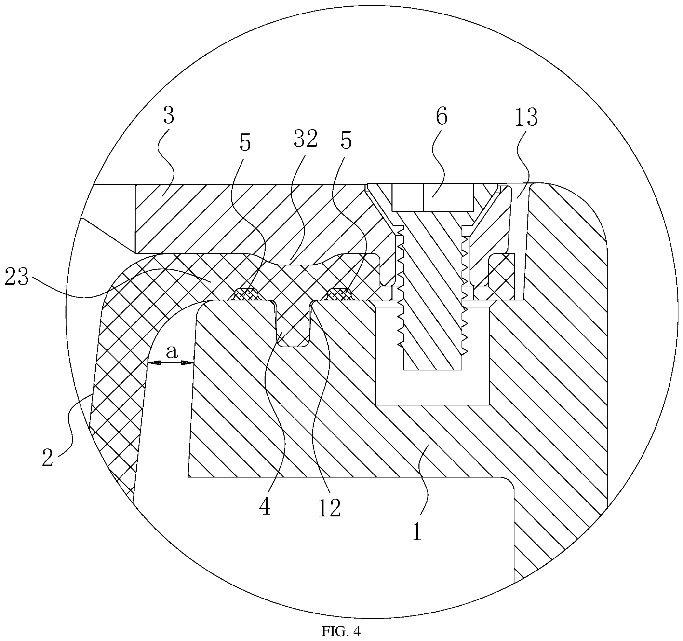

In an embodiment, as shown in FIG. 4, along a horizontal direction, a length of an abutting surface of the protective cover 3 that abuts against the connection portion 23 is greater than a length of an abutting surface of the housing 1 that abuts against the connection portion 23. In this way, a certain distance a is defined between the cushioning protrusion 221 and the housing 1 to serve as a deformation space. When the pouch 2 is deformed connection between the cushioning protrusion 221 and the connection portion 23 has a larger bending angle, further preventing the connection portion 23 of the pouch 2 from being ruptured due to the tension.

In an embodiment, the body 21 is arranged with a guiding protrusion 211 protruding towards the interior. A side of the guiding protrusion 211 away from the interior of the housing 1 defines a first guiding groove 212. An opening of the first guiding groove 212 faces towards the protective cover 3. The protective cover 3 is arranged with a protrusion 33 protruding towards the pouch 2. The protrusion 33 is inserted in the guiding protrusion 211. A side of the protrusion 33 away from an interior of the pouch 2 defines a second guiding groove 34. An opening of the second guiding groove 34 faces away from the pouch 2. The through hole 31 is defined in the protrusion 33. The second guiding groove 34 may direct the pressure of the seawater to the first guiding groove 212, guiding the pressure of the seawater to firstly apply on the body 21 of the pouch 2, such that the deformation of the pouch 2 is spread from the body 21 towards the cushioning portion 22 and the connection portion 23 successively.

In an embodiment, the pouch 2 is made of rubber. In an embodiment, the pouch 2 is made of Nitrile Butadiene Rubber (NBR). In other embodiments, the pouch 2 is made of other polymeric compounded rubber. The material of the pouch 2 is not limited herein.

In an embodiment, the protective cover 3 is a metal cover. A density of the metal cover is 0.2 g/cm³ to 8.0 g/cm³. In an embodiment, the density of the metal cover is 2.5g/cm³, 2.6g/cm³, 2.7g/cm³, 2.8g/cm³, 3g/cm³, and so on. In an embodiment, the protective cover 3 is an aluminum alloy, and a density of the aluminum alloy is 2.63g/cm³ to 2.85g/cm³ and has high strength and good corrosion resistance. The aluminum alloy may withstand the pressure of the seawater and is resistant to corrosion caused by the seawater, such that structural strength of the deep-sea battery device is improved.

In the present embodiment, as shown in FIG. 4, the housing 1 includes a stepped groove 13 annularly surrounding a periphery of the pressure-releasing port 11. The pouch 2 and the protective cover 3 are secured to a bottom of the stepped groove 13 by a plurality of fasteners 6. The plurality of fasteners 6 are spaced apart from each other and are distributed along the periphery of the bottom of the stepped groove 13. In an embodiment, the fasteners 6 are screws. The connection portion 23 of the pouch 2 defines a plurality of first openings along a peripheral direction, and the plurality of first openings are spaced apart from each other. The protective cover 3 defines a plurality of second openings corresponding to the plurality of first openings. The housing 1 defines a plurality of threaded holes. The screws are mated with the threaded holes through the first openings and the second openings to secure both the protective cover 3 and the pouch 2 to the stepped groove 13 at the same time. The pouch 2 and the protective cover 3 are lower than the outer side of the housing 1 that defines the pressure-releasing port 11. In this way, a size of the deep-sea battery device is further reduced. In addition, since the plurality of fasteners 6 are spaced apart from each other and are disposed along the periphery of the bottom of the stepped groove 13, a periphery of the pouch 2 and a periphery of the protective cover 3 receive forces uniformly and are fixed to the housing 1.

In an embodiment, as shown in FIG. 4, the protective cover 3 and the pouch 2 are mounted to the housing 1 by face sealing. In an embodiment, the connection portion 23 is arranged with a first sealing member 4 protruding along the peripheral direction. The first sealing member 4 is a first sealing bar formed by protruding from the connection portion 23 of the pouch 2 towards the housing 1. The housing 1 includes a connection surface connected to the pouch 2, and the connection surface defines a sealing groove 12. The first sealing bar is inserted into the sealing groove 12. The housing 1 and the pouch 2 form a first sealing structure by engaging the first sealing member 4 with the sealing groove 12. In this way, seawater water is prevented from flowing to the interior of the pouch 2 from the connection between the pouch 2 and the housing 1.

In an embodiment, the protective cover 3 is arranged with a rib 32, the rib 32 abuts against a side of the connection portion 23 near the protective cover 3 and corresponds to the first sealing member 4. The rib 32 enables an abutting portion of the pouch 2 that abuts against the rib 32 to be deformed towards the housing 1, and the deformation of the abutting portion applies a certain force on the first sealing member 4 to allow the first sealing member 4 to be more tightly embedded in the sealing groove 12. In this way, a sealing effect of the first sealing member 4 is improved.

In an embodiment, a width of the first sealing member 4 is 1.2mm to 2 mm, and a protruding height of the first sealing member 4 is 1mm to 3 mm. A size of the sealing groove 12 matches with a size of the first sealing member 4. In this way, the sealing effect of the first sealing member 4 is ensured, and at the same time, the first sealing member 4 is smaller, and manufacturing materials are saved.

In an embodiment, at least two second sealing members 5 are arranged on the connection surface of the housing 1. The connection surface of the housing 1 is protruding towards the pouch 2 to form a second sealing bar. The second sealing bar serves as the second sealing member 5. The two second sealing members 5 are disposed at two sides of the sealing groove 12 in a width direction of the sealing groove 12. The second sealing member 5 abuts against a side of the connection portion 23 near the housing 1. The two second sealing members 5, which are disposed at two sides of the sealing groove 12 in the width direction, abut against the connection portion 23 of the pouch 2 to form a second sealing structure. In this way, the sealing effect between the pouch 2 and the connection surface of the housing 1 is further improved, ensuring the ability of the deep-sea battery device to balance the pressure of the sea.

In an embodiment, a width of the second sealing member 5 is 0.8mm to 1.1 mm, and a protruding height of the second sealing member 5 is 0.5mm to 0.9 mm. The width and the protruding height of the second sealing member 5 are smaller than the width and the protruding height of the first sealing member 4, respectively. In this way, the sealing effect is improved. In addition, when the pouch 2 and the protective cover 3 are mounted to the housing 1, the compression volume of the pouch 2 is controlled to be between 25% and 30% of the total size of the pouch 2, ensuring that a better sealing effect is achieved when the pouch 2 abuts against the second sealing member 5 of the housing 1, without damaging the pouch 2.

In the description herein, it is to be understood that the terms "above" and other orientations or positional relationships are based on the structures shown in the accompanying drawings and are used only for ease of description. The terms are not to indicate or imply that the devices or the structures must have a particular orientation or constructed and operated in a particular orientation. Therefore, the terms shall not be interpreted as a limitation of the present disclosure.

In the description of the present disclosure, the term "an embodiment" or the like is intended to mean that specific features, structures, materials, or properties in the embodiment are included in at least one embodiment or example of the present disclosure. In the present disclosure, schematic expressions of the above terms do not necessarily refer to a same embodiment.

In addition, it shall be understood that, although the present disclosure is described in accordance with embodiments, each embodiment does not contains only one independent technical solution. Description of the present disclosure is only for clarity, and any ordinary skilled person in the art shall take the specification as a whole, and technical solutions in various embodiments may be appropriately combined to form other embodiments that can be understood by any ordinary skilled person in the art.

## Claims

1. A deep-sea battery device, comprising: a housing, a pouch, and a protective cover; wherein,
the housing defines a pressure-releasing port, the pouch seals the pressure-releasing port;
the pouch comprises a body, a cushioning portion, and a connection portion; the cushioning portion is disposed between the body and the connection portion; the connection portion is clamped between the protective cover and the housing;
the cushioning portion at least comprises an annular cushioning protrusion surrounding a periphery of the body, the cushioning protrusion protrudes toward an interior of the housing; a side of the cushioning protrusion away from the interior of the housing defines a groove; an opening of the groove faces the protective cover;
the protective cover defines a through hole, the through hole is disposed at a position corresponding to the body; and
the body is disposed lower than an outer side.

2. The deep-sea battery device according to claim 1, wherein, the connection portion is arranged with a first sealing member protruding along a peripheral direction; the housing comprises a connection surface connected to the pouch; the connection surface defines a sealing groove; and the first sealing member is inserted into the sealing groove.

3. The deep-sea battery device according to claim 2, wherein a side of the protective cover near the pouch is arranged with a rib, the rib abuts against the connection portion and corresponds to the first sealing member.

4. The deep-sea battery device according to claim 2, wherein at least two second sealing members are arranged on and protrude from the connection surface; the two second sealing members are disposed at two sides of the sealing groove in a width direction of the sealing groove; and the two second sealing members are clamped between the connection portion and the connection surface.

5. The deep-sea battery device according to claim 4, wherein, a width of each of the two second sealing members is 0.8mm to 1.1 mm, and a protruding height of each of the two second sealing members is 0.5mm to 0.9 mm.

6. The deep-sea battery device according to claim 2, wherein, a width of the first sealing member is 1.2mm to 2 mm, and a protruding height of the first sealing member is 1mm to 3 mm.

7. The deep-sea battery device according to claim 1, further comprising a plurality of fasteners, wherein, the pouch is connected to the housing through the fasteners.

8. The deep-sea battery device according to claim 7, wherein, the housing comprises a stepped groove annularly surrounding a periphery of the pressure-releasing port, the pouch and the protective cover are secured to a bottom of the stepped groove by the fasteners.

9. The deep-sea battery device according to claim 1, wherein, the body is arranged with a guiding protrusion protruding towards the interior; a side of the guiding protrusion away from the interior of the housing defines a first guiding groove; an opening of the first guiding groove faces towards the protective cover; the protective cover is arranged with a protrusion protruding towards the pouch; the protrusion is inserted in the guiding protrusion; the through hole is defined in the protrusion.

10. The deep-sea battery device according to claim 1, wherein, the pouch is made of rubber.
